# EUROPEAN PATENT APPLICATION

(11) **EP 4 280 404 A1**
(43) Date of publication of application: **22.11.2023**
(21) Application number: 23173479.9
(22) Date of filing: 15.05.2023
(51) Int. Cl.: H02G 15/113, H02G 15/013, H02G 15/18, H01R 4/70

(54) **ELECTRICAL AND MECHANICAL PROTECTION FOR ELECTRICAL CONNECTORS**

(30) Priority: 18.05.2022 DE 202022102762 U
(71) Applicant: HellermannTyton GmbH, 25436 Tornesch (DE)
(72) Inventor: Matser, Herman, 6931 CH Westervoort (NL)
(74) Representative: Hernandez, Yorck

(57) **Abstract**

The disclosure relates to a protective housing (1) for at least one electrical connector (11) of at least two electrical cables (9, 9'), which is suitable for different cable diameters of the electrical cables (9, 9'), with a middle part (2) having an internal space (12) for receiving the electrical connector (11) and an insulating gel; with at least one first end part (3) and with at least one second end part (3'); wherein the end parts (3, 3') are each designed to receive a cable (9, 9') along a predetermined course from an environment (5) towards the middle part (2), and at least one end part (3, 3') has, radially circumferentially around the predetermined course of the cable (9, 9'), a series of sealing fingers (6a-6e, 6a'-6e') separated from one another by slits (7a-7d, 7a'-7d'); wherein the respective sealing fingers (6a-6e, 6a'-6e') of one end part (3, 3') taper with increasing distance from the middle part (2) and converge towards each other at least in a neutral position without inserted cable (9, 9'); and wherein at least one of the sealing fingers (6a-6e, 6a'-6e') of the first or second end part (3, 3') has on an outer side a row (8, 8') of latching lugs (8a-8d, 8a'-8d') extending along the outer side in an axial direction so as to overcome the disadvantages known from the prior art and providing an improved protective housing (1) for an electrical connector (11) which protects the electrical connection both from water and from mechanical attacks.

## Description

The disclosure relates to a protective housing for at least one electrical connector of at least two electrical cables, which is suitable for different cable diameters of the electrical cables, and thereby comprises: a middle part having an inner space for receiving the electrical connector and an insulating gel, and at least one first end part and at least one second end part, the end parts each being designed to receive a cable along a predetermined course from an outer space of the protective housing into the middle part of the protective housing, and the two end parts have, radially circumferentially around the predetermined course of the cable, the cable run, a row of sealing fingers separated from one another by slits, the respective sealing fingers of an end part tapering with increasing distance from the middle part and converging towards one another at least in a neutral position without an inserted cable.

Generally, long-term waterproof electrical insulation is often achieved by using an insulating gel, typically a two-component polymer gel, which is held in place by a plastic housing around an electrical connector to be insulated. The insulating gel remains in a liquid state forever and therefore permanently insulates the electrical connections, i.e. the electrical connector from water in the environment. The electrical connector is thus electrically insulated from the outside world by an insulating gel immersion bath. Because the insulating gel remains liquid, the corresponding housing can be opened again even after a longer period of time in order to make changes and adjustments to the electrical connection. After such an adjustment, a housing with sufficient insulating gel is then mounted around the connection again.

Accordingly, in existing systems, an enclosure, typically two enclosure halves, is filled with the insulating gel, then the cables connected by the electrical connector are inserted into the enclosure in such a way that the electrical connector is immersed in the insulating gel, and then the enclosure is closed. In principle, too much insulating gel is initially present in the housing, so that when the housing is closed, a pressure is required by which the insulating gel, which is typically very sticky, fills any empty space inside the housing, so that the electrical connector can no longer be reached by water. Accordingly, the insulating gel may be a hydrophobic insulating gel. Excess insulating gel is pressed out of the housing laterally, at the openings through which the electrical cables reach into the internal space of the housing. This pressing out is necessary to achieve the pressure that presses the insulating gel into any available free space in the enclosure when it is closed. Thus, after closing the housing, on the one hand the electrical connection created by the electrical connector is sealed watertight by the gel, and on the other hand this connection is also mechanically protected by the housing. However, the openings through which the insulating gel is pressed out remain open, as described below.

Since the existing solutions are designed for different cable diameters of the electrical cables, no strain relief is provided there: for strain relief, it is basically necessary to adapt the enclosure to specific cable diameters in each case. Furthermore, in existing designs, the design for different cable diameters leads to the excess insulating gel being squeezed out laterally past the electrical cables in the entry area of the electrical cables into the enclosure. However, together with the design for different cable diameters, this has the consequence that foreign bodies such as a wire with a diameter of 1 mm can easily be pushed into the internal space of the enclosure at these points. This means that certification in accordance with relevant protocols, for example IP68 certification, which also requires a specified mechanical protection of the electrical connection, is not possible in existing systems. Accordingly, roots, for example, can penetrate into the internal space of the enclosure and interrupt the electrical connection in the long term. It is also often observed that animals, such as rats, mice and ants, penetrate to the insulating gel and remove or eat it. This also endangers the permanent electrical insulation. In addition, the squeezed-out excess gel often causes disgust among people who want to check or adjust the connection and therefore have to open the housing, since all kinds of things stick to the very sticky insulating gel, as already mentioned above, and thus the housing cannot be kept clean at the entry ends of the electrical cables in real use. Exemplary protective housings are described in US 7 094 972 B2, KR 101 754 811 B1, KR 200 480 703 Y1, or KR 200 428 988 Y1.

The present disclosure is thus based on the task of overcoming the disadvantages known from the prior art and providing an improved protective housing for an electrical connector which protects the electrical connection both from water and from mechanical attacks.

This task is solved by the object of the independent claims. Advantageous embodiments result from the dependent claims, the description and the figures.

One aspect relates to a protective housing for at least one electrical connector of at least two electrical cables, which is suitable for different cable diameters of the electrical cables and is designed to protect the electrical connector and thus the electrical connection of the two electrical cables from water and mechanical attacks. The protective housing comprises a middle part and at least one first and at least one second end part, each of which adjoins the middle part. Thus, several first and/or several second end parts may also be provided. For example, in a Y or T protective housing for three electrical cables or as an H protective housing for four electrical cables. What is described below for the first and/or second end part or parts can then also apply to the other end parts. The middle part has an inner space for receiving the electrical connector and an insulating gel. Such an insulating gel may in particular be a hydrophobic insulating gel. The insulating gel may, for example, be or comprise a two-component polymer gel.

The end parts are each designed to receive and/or guide a cable along a predetermined course from an environment of the protective housing to the middle part as mouth area of the protective housing. For this purpose, the end parts have, running radially around the predetermined course of the cable, a row of sealing fingers separated from each other by slits. When used as intended, the sealing fingers are thus designed to run around a circumference of the cable as a row running completely around the circumference. In this case, the respective sealing fingers of an end part, preferably of the first and/or second end parts, taper (in their width) with increasing distance from the middle part and, at least in a neutral position without an inserted cable, run towards each other in a radial direction with increasing distance from the middle part. The width of the sealing fingers thus decreases with increasing distance from the middle part, the width being given in a direction tangential to the predetermined course of the cable. A given thickness of the sealing fingers in a radial direction can, for example, be between 0.5 mm and 5 mm, preferably less than 2 mm, particularly preferably between 0.8 mm and 1.5 mm. The sealing fingers thus form, at least in the neutral position, a conically converging partition of an outer wall of the protective housing. Due to the conical convergence, the respective end part is capable of accommodating cables of different diameters and at the same time achieving reliable mechanical protection of the internal space of the protective housing, as will be described below. Preferably, the sealing fingers are also designed symmetrically, for example with an n-fold rotational symmetry, around the predetermined course of the cable. An eightfold rotational symmetry is particularly advantageous, i.e. an embodiment with eight sealing fingers (in this case, the latching lugs described below are not taken into account in the symmetry consideration).

This is made possible by the fact that at least one of the sealing fingers of the respective first and/or second end part, preferably each end part, has, on an outer side of the sealing finger facing, when the protective housing is used as intended, away from the associated electrical cable, a row of latching lugs or detents running along the outside in an axial direction. The axial direction can be understood here as a direction which spans a plane with the centre line of the predetermined course of the cable, which in turn is perpendicular to a further plane which is defined by the centre line of the predetermined course of the cable as a normal vector. The radial direction thus runs in the further plane, as does the tangential direction. Thus, during intended use, a cable tie closed around the sealing fingers and the cable can be held against axial slippage in the axial position determined by the latching lugs. A row of latching lugs can also be assigned to several sealing fingers, for example with a first latching lug of a first row on a first sealing finger, a second latching lug of the first row on a second sealing finger, etc, providing a spiral of latching lugs around the predetermined course of the cable. Axial direction can then also be understood as a direction essentially corresponding to the above definition, which spans a plane with the centre line of the cable run, which is not exactly perpendicular, but still transverse to the further plane.

The cable tie closed around the sealing fingers and the cable thus presses the sealing fingers onto the cable, whereby the sealing fingers form a reliable mechanical protection of the internal space of the protective housing, in particular of the internal space of the middle part, since the cable tie prevents a foreign body from penetrating through the slits between the sealing fingers into the internal space, since the sealing fingers cannot be spread open and the slits can be chosen narrow enough. The spacing of the latching lugs allows the cable tie to lie flat between the latching lugs, whereby the above-mentioned thickness of the sealing fingers in the radial direction is selected depending on the material of the sealing fingers such that they can fit snugly against the cable surface between the latching lugs.

At the same time, the sealing fingers form an antechamber for insulating gel pressed out of the internal space, which is, however, reliably mechanically protected from the environment. Only very small hair roots can still penetrate through the slits in the direction of the internal space through the protective housing, so the insulating gel is protected from animals with a suitably selected slit width. Since larger objects such as wires are thus also prevented from penetrating the electrical connector, a certified protective function can be achieved, for example according to IP68 certification. Furthermore, the protective housing is also more visually appealing, as any dirt adhering to the squeezed gel is no longer visible from the outside. Furthermore, as described below, the described design can also be used to implement a strain relief.

The protective housing, and thus the middle part and the end parts, can each have two halves which can be moved against each other and are fixed to each other when used as intended with the cable inserted along the intended course. This can be done, for example, by means of a film hinge in combination with a snap-click connection, which is then additionally secured in the closed configuration by at least one cable former, which presses the corresponding sealing fingers against the inserted cable. Then, during intended use, the cable tie closed around the sealing fingers and the cable combines the functions of securing a closing mechanism of the protective housing (such as the snap-click-connection) and of holding the sealing fingers in place, i.e. securing protection from mechanical attacks.

In an advantageous embodiment, it is provided that the slits between the sealing fingers of the end part or parts are, in the neutral position without the electric cable, less than 1 mm wide, preferably less than 0.5 mm wide, and/or are at least in sections, in a use position with an inserted electric cable, less than 1 mm wide, preferably less than 0.5 mm wide, in a section of the sealing fingers closest in front of the middle part. The section closest to the middle part is determined by the position in which the cable tie is placed around the sealing fingers and the electrical cable during intended use: It is the (axial) section between the cable tie and the middle part. In the section further away from the middle part, behind the cable tie as seen from the middle part, the slits can accordingly also be wider than 1 or 0.5 mm. This has the advantage that an IP68 certification can be achieved.

In a further advantageous embodiment, it is provided that the slits between the sealing fingers of the end part or parts have, in the neutral position without an electric cable, a constant or substantially constant (tangential) width along the axial direction and/or have at least in sections, in a use position with an inserted electric cable, a constant or substantially constant width along the axial direction in the section of the sealing fingers closest to the middle part. In particular, the slits may be straight, preferably in an axial direction. In this way, the mechanical stability of the sealing fingers and thus the mechanical protection can be maximised, while at the same time a punctual break-through of foreign bodies towards the inner space is prevented.

In an advantageous embodiment, it is provided that the latching lugs have a spacing of at least 5 mm and/or the row has at least 3, preferably at least 4, particularly preferably 5 latching lugs. This has proven to be advantageous, since on the one hand, commercially available cable ties can be used to press the sealing fingers against the cable, but on the other hand, it has been found that some, but not many, different positions of the cable ties are required for the reliable protection of variable cable thicknesses. Just four different positions and thus four different cable diameter ranges have generally proven to be sufficient.

In a further advantageous embodiment, it is provided that at least two sealing fingers, preferably two sealing fingers diametrically opposed relative to the predetermined course of the cable, thus radially opposed, have a row of latching lugs running along the outside in an axial direction. This secures the cable tie particularly effectively and efficiently against slipping.

In another advantageous embodiment, it is provided that at least one sealing finger, preferably several sealing fingers, preferably a quarter of the sealing fingers, is designed without latching lugs and thus does not have a row of latching lugs on the outside. This has the advantage that the handling is increased, as the cable tie does not have to be positioned as precisely on the smooth, i.e. lug-free, sealing fingers and thus automatically moves into the position specified by the sealing fingers with lugs when tightened.

In a further particularly advantageous embodiment, it is provided that one or more sealing fingers, preferably the sealing finger or fingers with the row of latching lugs, has a row of strain relief teeth running along an inner side in the axial direction on the inner side facing the associated electrical cable when the protective housing is used as intended. This has the advantage that when the cable tie is tightened, the strain relief teeth are pressed into an outer surface or outer skin of the electrical cable and thus strain relief is realised. Since not only one strain relief tooth is provided, but rather a row running in the axial direction, strain relief is also achieved for different cable diameters, i.e. different positioning of the cable tie to be tightened on the sealing fingers.

Therein, it may be provided that the sealing finger(s) with the row of latching lugs has the row of strain relief teeth and in an orthogonal projection to an outer side of the cable, the respective strain relief teeth are arranged between respective latching lugs. The row of strain relief teeth is thus arranged parallel to, but offset from, the row of latching lugs. This maximises the contact force of the strain relief teeth on the electrical cable, which is achieved by the cable tie, and the strain relief is particularly robust.

In a further advantageous embodiment, it is provided that on at least one sealing finger on the outer side a row of numbers is applied running along the outer side in an axial direction, which numbers indicate the cable diameter up to which, when an inserted cable is tied and/or secured at the position of the respective number with a cable tie pulled around the sealing fingers, the slits between the sealing fingers in a respective section between the cable tie and the middle part do not exceed the predetermined width, preferably a width of 1 mm or, particularly preferably, a width of 0.5 mm. This achieves improved operability, as it is thus directly apparent to an operator at which position along the sealing fingers the cable tie is to be applied for optimum protective function of the housing.

Another aspect relates to a protective housing kit for protecting one or more electrical connectors, which electrically couple at least two electrical cables to one another, from water and mechanical attacks, having a protective housing according to one of the embodiments described, wherein an insulating gel is introduced into the middle part, and having at least one cable tie, the width of which corresponds to the distance between the latching fingers of a row. The number of cable ties is preferably adapted to the number of end parts of the sealing fingers equipped with latching lugs.

Another aspect relates to a method for protecting an electrical connector, which electrically couples at least two electrical cables, from water and mechanical attacks. The method comprises a series of method steps. One method step is inserting the electrical connector into the middle part of an opened protective housing, comprising inserting a first one of the electrical cables into a first end part of the opened protective housing and inserting a second electrical cable into a second end part of the opened protective housing, wherein an insulating gel is placed in the middle part and the two end parts are respectively connected to the middle part. A further method step is the closing of the protective housing, with sealing fingers of the respective end part being pressed against the associated cables, wherein the sealing fingers taper with increasing distance from the middle part and converge towards one another at least in a neutral position without an inserted cable. Finally, as a further process step, the closed protective housing is secured by closing a cable tie around the respective cables and sealing fingers of the associated end parts, the closed and fixed cable tie running between two latching lugs which belong to a row of latching lugs running on an outer side of at least one sealing finger along the outer side in an axial direction, and the sealing fingers thus being pressed against the respective cable by the cable tie in the region between the two latching lugs. The latching lugs prevent the cable tie from subsequently slipping along the cable, which on the one hand keeps the sealing fingers in the intended position, and on the other hand prevents the protective housing from being opened unintentionally. This makes further securing of a locking mechanism superfluous, rather the cable tie fulfils the two functions of securing the locking mechanism and securing the mechanical protection of the electrical connector.

Advantages and advantageous embodiments of the method correspond to advantages and advantageous embodiments of the protective housing and vice versa.

The features and combinations of features mentioned above in the description, including in the introductory part, as well as the features and combinations of features mentioned below in the description of the figures and/or shown in the figures alone, can be used not only in the respective combination indicated, but also in other combinations without leaving the scope of the disclosure. Thus, embodiments are also to be regarded as encompassed and disclosed by the disclosure which are not explicitly shown and explained in the figures, but which arise from the explained embodiments and can be produced by separate combinations of features. Embodiments and combinations of features are also to be regarded as disclosed which thus do not have all the features of an originally formulated independent claim. In addition, embodiments and combinations of features are to be regarded as disclosed, in particular by the embodiments set out above, which go beyond or deviate from the combinations of features set out in the recitations of the claims.

With the aid of the schematic drawings shown in the following figures, the described object will be explained in more detail, without wishing to restrict it to the specific embodiments shown here.

Therein
- Fig. 1: shows perspective view of an exemplary embodiment of a protective housing;
- Fig. 2: shows perspective view of an end part of a further exemplary embodiment of a protective housing with inserted thinner cable;
- Fig. 3: shows a perspective view of the exemplary embodiment from Fig. 2 with inserted thicker cable;
- Fig. 4: shows a schematic view of the embodiment of Fig. 1; and
- Fig. 5: shows sectional view of the embodiment of Fig. 1 according to the sectional plane drawn in Fig. 4, with a smaller diameter cable in a first end part and a larger diameter cable in a second end part.

In the different figures, the same or functionally identical elements are given the same reference sign.

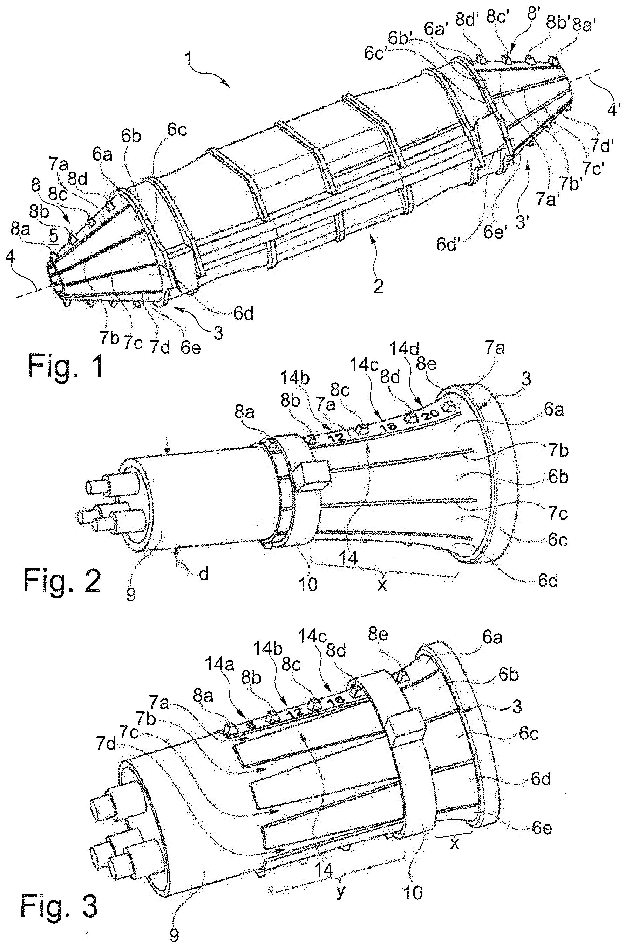

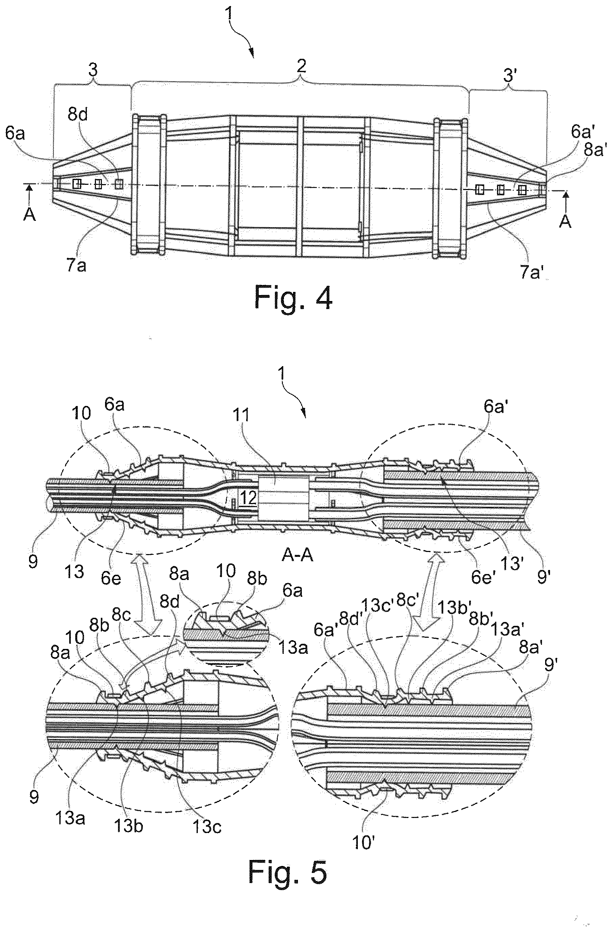

Fig. 1 shows a perspective view of a protective housing 1 for an electrical connector 11 (Fig. 5), not shown here, of two electrical cables 9, 9' (Figs. 2, 3, 5), also not shown, which is suitable for different cable diameters d (Fig. 2) of the electrical cables 9, 9', as can be seen for example from Figs. 2 and 3. The protective housing 1 has a middle part 2 as well as a first end part 3 and a second end part 3'. The middle part 2 has an inner space 12 (Fig. 5) for receiving the electrical connector 11 and an insulating gel. The end parts 3, 3' are each designed to receive or guide a cable 9, 9' along a predetermined course 4, 4', here marked by a corresponding centre line, from an environment 5 towards the middle part 2.

Here, the two end parts 3, 3' have a row of sealing fingers 6a - 6e, 6a' - 6e' running radially around the predetermined course 4, 4', which are separated from each other by respective slits 7a - 7d, 7a' - 7d'. The respective sealing fingers 6a - 6e, 6a' - 6d' of an end part 3, 3' taper with increasing distance from the middle part 2 and run towards each other at least in the shown neutral position without inserted cable 9, 9'. The sealing fingers 6a - 6e, 6a' - 6d' thus create an end part 3, 3' which tapers outwards, i.e. away from the middle part 2, and which is, as the sealing fingers 6a - 6e, 6a' - 6d' are flexible, suitable for accommodating cables 9, 9' of different cable diameters d. At least one, in this case two, sealing fingers 6a, 6e, 6a', 6e' of the first and second end part 3, 3' have, on an outer side, a row 8, 8' of latching lugs 8a - 8d, 8a' - 8d' running along the outer side in an axial direction. The spacing of the latching lugs 8a - 8d, 8a' - 8d' is adapted to an associated cable tie 10 (Figs. 2, 3, 5) so that it is held in an axially predetermined position by the latching lugs 8a - 8d, 8a' - 8d' when it is closed around the sealing fingers 6a - 6e, 6a' - 6d', as shown in Figs. 2 and 3.

Fig. 2 now shows the end part 3 of a further exemplary embodiment of a protective housing 1 with inserted cable 9. The cable 9 is held in the axially predetermined position by a cable tie 10 closed around the sealing fingers 6a - 6e, 6a' - 6d' and the cable 9, i.e. secured against axial slippage. In this case, the cable tie 10 runs between the two latching lugs 8a, 8b furthest away from the middle part 2 and is thus in a distal position far away from the middle part 2. As a result, the end part 3 is adapted to a relatively small cable diameter d, since the sealing fingers 6a - 6e, 6a' - 6d' have only a relatively small (tangential) width in the area and the sum of the widths there corresponds essentially to the circumference of the cable 9. In the example shown, the slits 7a - 7c thus have a constant width over the entire (axial) course, the length of the sealing fingers 6a - 6e, 6a' - 6d', which is very small and thus prevents foreign bodies from penetrating into the internal space of the protective housing 1.

In Fig. 3, the end part 3 from Fig. 2 is adapted to a thicker cable diameter d. Accordingly, the cable tie 10 is now in a position close to the middle part 2 (proximal position). Correspondingly, the cable tie 10 is now in a position close (proximal) to the middle part 2, i.e. closer to the middle part 2 than in Fig. 2. Correspondingly, the cable tie 10 is secured here by the two latching lugs 8d and 8e closest to the middle part against slipping on the sealing fingers 6a - 6e, 6a' - 6d' and the cable 9 respectively. Accordingly, the width of the slits 7a - 7c in the area x between the cable tie 10 and the middle part 2 is also of essentially constant width here, which can be less than 1 mm, for example. In the more distant area y, on the other hand, a small slit width is no longer necessary for the secure protection of the internal space of the protective housing 1. Due to the larger diameter d of the cable 9, the slits widen here with increasing distance from the middle part 2. Again, the sum of the widths of the sealing fingers 6a - 6e, 6a' - 6d' in the area of the cable tie 10 corresponds essentially to the circumference of the cable 9.

Fig. 4 shows a schematic view of the protective housing of Fig. 1, with a sectional plane A-A drawn in, which is relevant for the illustration shown in Fig. 5.

Fig. 5 accordingly shows a sectional view of the protective housing 1 of Fig. 1 when used as intended for two cables 9, 9' of different cable diameters d. Accordingly, an electrical connector 11 is shown there in an internal space 12 filled with the insulating gel. In addition to the sealing fingers 6a, 6a', 6e, 6e' provided with latching lugs 8a - 8d, 8a' - 8d', on an inner side a row 13, 13' of strain relief teeth 13a - 13c, 13a' - 13c' is provided here along the inner side in the axial direction. These are arranged here between the latching lugs 8a - 8d, 8a' - 8d' as viewed in an orthogonal projection onto an outer side of the corresponding cables 9, 9', i.e. alternating to the latching lugs 8a - 8d, 8a' - 8d'. Thus the respective strain relief teeth 13a - 13c, 13a' - 13c', for a smaller cable diameter d as shown on the left in Fig. 5, presently the distal strain relief tooth 13a between the latching lugs 8a and 8b, and for a larger cable diameter d as shown on the right in Fig. 5, the proximal locking tooth 13c' between the latching lugs 8c', 8e' is pressed into the cable 9, 9' by the respective cable tie 10, 10', thus providing strain relief.

## Claims

1. A protective housing (1) for at least one electrical connector (11) of at least two electrical cables (9, 9'), which is suitable for different cable diameters of the electrical cables (9, 9'), comprising
- a middle part (2) having an internal space (12) for receiving the electrical connector (11) and an insulating gel; and
- at least one first end part (3) and
- at least one second end part (3');
wherein
- the end parts (3, 3') are each designed to receive a cable (9, 9') along a predetermined course from an environment (5) towards the middle part (2), and at least one end part (3, 3') has, radially circumferentially around the predetermined course of the cable (9, 9'), a series of sealing fingers (6a-6e, 6a'-6e') separated from one another by slits (7a-7d, 7a'-7d'); wherein
- the respective sealing fingers (6a-6e, 6a'-6e') of one end part (3, 3') taper with increasing distance from the middle part (2) and converge towards each other at least in a neutral position without inserted cable (9, 9')
characterised in that-
at least one of the sealing fingers (6a-6e, 6a'-6e') of the first or second end part (3, 3') has on an outer side a row (8, 8') of latching lugs (8a-8d, 8a'-8d') extending along the outer side in an axial direction.

2. Protective housing (1) according to claim 1,
**characterised in that**
the slits (7a-7d, 7a'-7d') between the sealing fingers (6a-6e, 6a'-6e') of the end part or parts (3, 3') in the neutral position without electric cable (9, 9') are less than 1mm wide, preferably less than 0,5mm wide, and/or in a use position with inserted electric cable (9, 9') at least in sections are less than 1mm wide, preferably less than 0.5mm wide, in a section of the sealing fingers (6a-6e, 6a'-6e') closest to the middle part (2).

3. Protective housing (1) according to any one of the preceding claims,
**characterised in that**
the slits (7a-7d, 7a'-7d') between the sealing fingers (6a-6e, 6a'-6e') of the end part or parts (3, 3') in a neutral position without electrical cable (9, 9') have a constant or substantially constant width along the axial direction and/or in a use position with inserted electric cable (9, 9') at least in sections have a constant or substantially constant width along the axial direction in the section of the sealing fingers (6a-6e, 6a'-6e') closest to the middle part (2).

4. Protective housing (1) according to any one of the preceding claims,
**characterised in that**
the latching lugs (8a-8d, 8a'-8d') have a spacing of at least 5mm and/or the row (8, 8') has at least 3 latching lugs (8a-8d, 8a'-8d'), preferably at least 4 latching lugs (8a-8d, 8a'-8d'), particularly preferably 5 latching lugs (8a-8d, 8a'-8d').

5. Protective housing (1) according to any one of the preceding claims,
**characterised in that**
at least two of the sealing fingers (6a-6e, 6a'-6e'), preferably sealing fingers (6a-6e, 6a'-6e') diametrically opposed relative to the predetermined course of the cable (9, 9'), have a row (8, 8') of latching lugs (8a-8d, 8a'-8d') running along the outside in an axial direction.

6. Protective housing (1) according to any one of the preceding claims,
characterised in thatat least
one sealing finger (6a-6e, 6a'-6e'), preferably several sealing fingers (6a-6e, 6a'-6e'), particularly preferably a quarter of the sealing fingers (6a-6e, 6a'-6e'), is designed without latching lugs.

7. Protective housing (1) according to any one of the preceding claims,
**characterised in that**
one or more sealing fingers (6a-6e, 6a'-6e'), preferably the sealing finger or fingers (6a-6e, 6a'-6e') with the row (8, 8') of the latching lugs (8a-8d, 8a'-8d'), has on an inner side a row (13, 13') of strain relief teeth (13a-13c, 13a'-13c') running along the inner side in the axial direction.

8. Protective housing (1) according to the preceding claim,
**characterised in that**
the sealing finger or fingers (6a-6e, 6a'-6e') with the row (8, 8') of latching lugs (8a-8d, 8a'-8d') comprise the row (13, 13') of strain relief teeth (13a-13c, 13a'-13c') and in an orthogonal projection on an outer side of the cable (9, 9') the respective strain relief teeth (13a-13c, 13a'-13c') are arranged between respective latching lugs (8a-8d, 8a'-8d').

9. Protective housing (1) according to any one of the preceding claims,
**characterised in that**
on at least one sealing finger (6a-6e, 6a'-6e') on the outside there is attached a series of numbers running along the outside in an axial direction, which indicate the cable diameter up to which, when securing an inserted cable (9, 9') at the position of the respective number with a cable tie (10, 10') pulled around the sealing fingers (6a-6e, 6a'-6e'), the slits (7a-7d, 7a'-7d') between the sealing fingers (6a-6e, 6a'-6e') do not exceed the predetermined width, preferably a width of 1 mm or, particularly preferably, a width of 0.5 mm, in a respective section between the cable tie (10, 10') and the middle part (2).

10. Protective housing kit for protecting an electrical connector (11), which electrically couples at least two electrical cables (9, 9') to one another, from water and mechanical attacks, having a protective housing (1) according to any one of the preceding claims, wherein an insulating gel is introduced into the middle part (2), and having at least one cable tie (10, 10'), the width of which corresponds to the spacing of the latching lugs (8a-8d, 8a'-8d') of a row (8, 8').

11. Method for protecting an electrical connector (11), which electrically couples at least two electrical cables (9, 9'), comprising the method steps:
- inserting the electrical connector (11) into a middle part (2) of an opened protective housing (1), with inserting a first one of the electrical cables (9, 9') into a first end part (3) of the opened protective housing (1) and inserting a second one of the electrical cables (9, 9') into a second end part (3') of the opened protective housing (1), wherein an insulating gel is placed in the middle part (2) and the two end parts (3, 3') are respectively connected to the middle part (2);
- closing of the protective housing (1), with sealing fingers (6a-6e, 6a'-6e') of the respective end part (3, 3') being pressed against the associated cable (9, 9'), wherein the sealing fingers (6a-6e, 6a'-6e') taper with increasing distance from the middle part (2) and converge towards one another at least in a neutral position without an inserted cable (9, 9');
- closing a cable tie (10, 10') around the respective cables (9, 9') and sealing fingers (6a-6e, 6a'-6e') of the associated end parts (3, 3'), the closed and fixed cable tie (10, 10') running between two latching lugs (8a-8d, 8a'-8d') which belong to a row (8, 8') of latching lugs (8a-8d, 8a'-8d') running on an outer side of at least one sealing finger (6a-6e, 6a'-6e') along the outer side in an axial direction.
